# EUROPEAN PATENT APPLICATION

(11) **EP 4 799 884 A1**
(43) Date of publication of application: **02.09.2026**
(21) Application number: 24885835.9
(22) Date of filing: 31.10.2024
(51) Int. Cl.: B60W 20/10, B60K 6/28, B60K 6/485, B60W 10/08

(54) **STRADDLED VEHICLE**

(30) Priority: 31.10.2023 WO PCT/JP2023/039210
(71) Applicant: Yamaha Hatsudoki Kabushiki Kaisha, Iwata-shi, Shizuoka 438-8501 (JP)
(72) Inventor: TORIGOSHI, Masaki, Iwata-shi, Shizuoka 438-8501 (JP); HINO, Haruyoshi, Iwata-shi, Shizuoka 438-8501 (JP); TAKAHASHI, Toshihiko, Iwata-shi, Shizuoka 438-8501 (JP); YAMADA, Yuya, Iwata-shi, Shizuoka 438-8501 (JP); TAKASE, Hiroki, Iwata-shi, Shizuoka 438-8501 (JP)
(74) Representative: Stöckeler, Ferdinand
(86) International application number: PCT/JP2024/038912
(87) International publication number: WO 2025/095068

(57) **Abstract**

The present teaching provides a straddled vehicle including a compact and lightweight high-voltage hybrid system. The straddled vehicle includes an engine, a drive wheel, a high-voltage power supply system, a first permanent magnet motor generator, a first MG control unit, and a first power transfer device electrically connected to the high-voltage power supply system without a secondary battery that is electrically connected to the high-voltage power supply system and functions at a high voltage. The first MG control unit uses, as power, the high voltage that is higher than a low voltage of a low-voltage battery to perform a field-weakening control on the first permanent magnet motor generator, which includes a rotor that rotates at the same speed as the engine of the straddled vehicle and in which the number of magnetic poles is greater than 2/3 the number of teeth, so that the level of voltage suppression that is achieved through the field-weakening control increases because of increased reactance resulting from a greater number of magnetic poles of the first permanent magnet motor generator, and so that a component of current for the field-weakening control is supplied to a winding by overcoming increased reactance at high rotation speeds of the engine of the straddled vehicle because of the field-weakening control using the high voltage as power.

## Description

### Technical Field

The present teaching relates to a straddled vehicle.

### Background Art

Patent Literature (PTL) 1, for example, discloses a vehicle including a motor generator connected to an engine. The vehicle disclosed in PTL 1 is an automobile (FIG. 2 in PTL 1). The motor generator is connected to a high-voltage battery with an inverter therebetween.

PTL 2 also discloses an automobile including a motor generator. The motor generator disclosed in PTL 2 is connected to an engine with a reduction mechanism such as a belt or a chain therebetween. The motor generator is supplied with electric power at a high voltage from an energy storage device. Electric power generated by the motor generator is supplied to the energy storage device at a high voltage.

PTL 3, for example, discloses a straddled vehicle. The straddled vehicle disclosed in PTL 3 includes an engine, a starter generator, a battery, and a control unit. The battery is a low-voltage battery that drives the starter generator. The control unit in PTL 3 performs field-weakening control on the starter generator so as not to apply a voltage higher than the battery voltage to the low-voltage battery.

### Citation List

### Patent Literature

PTL 1: Japanese Patent Application Laid-Open Publication No. H9-084210
PTL 2: Japanese Patent Application Laid-Open Publication No. 2005-180254
PTL 3: Japanese Patent Application Laid-Open Publication No. 2017-129065

### Summary of Invention

### Technical Problem

It is often desired that a straddled vehicle includes a high-voltage hybrid system that is compact and lightweight, and capable of accommodating the rotation speed range of the engine of the straddled vehicle.

An objective of the present teaching is to provide a straddled vehicle including a high-voltage hybrid system that is compact and lightweight, and capable of accommodating the rotation speed range of the engine of the straddled vehicle.

The straddled vehicle is configured so that the posture of the vehicle is controlled during travel with shifts in a rider's body weight. From the perspectives of operability and travel performance, therefore, there is a tendency of desire for the straddled vehicle to be compact and lightweight. Accordingly, there is also a tendency of desire for the hybrid system that is mounted to the straddled vehicle and components thereof to be compact and lightweight.

A high-voltage-compatible motor generator has a structure that allows generation of required electric power even at low rotation speeds of the engine including, for example, an idle rotation speed. For example, the high-voltage-compatible motor generator includes stronger magnets compared to a motor generator that is not compatible with high voltage.

The high-voltage-compatible motor generator of the automobile disclosed in PTL 1 or PTL 2 can be, for example, applied to a straddled vehicle.

However, the engine of the straddled vehicle tends to operate over a wider rotation speed range including high rotation speeds than that of an automobile. This is because the engine of the automobile is configured to output high torque at low rotation speeds in order to start and accelerate the heavyweight automobile, whereas the engine of the straddled vehicle is configured to start and accelerate the relatively lightweight straddled vehicle, and it is desired that the engine of the straddled vehicle be compact and lightweight in order to be mounted to the compact and lightweight straddled vehicle.

In a case where a motor generator having a configuration compatible with high voltage is driven by the engine of the straddled vehicle that operates over a wide rotation speed range, the induced electromotive force of the motor generator may become excessively high at high rotation speeds of the engine of the straddled vehicle, and the terminal voltage of the motor generator may exceed a controllable range of the control unit. In a situation where the terminal voltage of the motor generator exceeds the controllable range, for example, electric power generation control needs to be halted.

A possible way to reduce the voltage of the motor generator is to connect the engine of the straddled vehicle to the motor generator with a reduction mechanism such as a belt or a chain therebetween, as disclosed in PTL 2. However, providing a reduction mechanism for the motor generator increases the size and the weight of the hybrid system of the straddled vehicle.

The inventor of the present teaching carried out detailed studies on a compact and lightweight configuration suitable for the rotation speed range of the engine of the straddled vehicle. As a result, the inventor found a configuration in which a high voltage is used as power to perform a field-weakening control on a permanent magnet motor generator that rotates at the same speed as the engine of the straddled vehicle and in which the number of magnetic poles is greater than 2/3 the number of teeth. The high voltage refers to a voltage higher than a low voltage of a low-voltage battery.

In a configuration where the permanent magnet motor generator has a greater number of magnetic poles, the angular velocity in terms of electrical angle is high. This configuration increases winding reactance, increasing the level of voltage suppression that is achieved through the field-weakening control. On the other hand, the permanent magnet motor generator having a greater number of magnetic poles causes the higher angular velocity, which further increases when the engine of the straddled vehicle runs at high rotation speeds. The winding reactance, which increases with an increase in the angular velocity, is a component of the impedance, and the impedance, which further increases at high rotation speeds, opposes a component of current for the field-weakening control. However, using a high voltage as power solves this problem. The high voltage can drive the field-weakening current to its target value despite the increased impedance resulting from a greater number of magnetic poles and high rotation speeds. In other words, the component of current for the field-weakening control is supplied to a winding by overcoming the increased impedance at high rotation speeds due to the field-weakening control using a high voltage as power.

The following gives a more detailed description.

Induced electromotive force E in the winding of the permanent magnet motor generator mainly depends on a product *φ·ω* of magnetic flux *φ* linked with the winding and angular velocity *ω* in terms of electrical angle.

In contrast, a main effective component for generating a terminal voltage that results from suppression of the induced electromotive force through the field-weakening control (also referred to simply as "suppressing the induced electromotive force") is represented by *L·ω·Id*. *L·ω* represents reactance of the winding. L represents inductance, which is generally a fixed value depending on the structure of the winding and the like. *Id* represents field-weakening current that is used in the field-weakening control, and the magnitude of the field-weakening current *Id* is controlled by a control unit. The angular velocity *ω* is the rate based on the periodic repetition of a pair of magnetic poles passing in the vicinity of a tooth. The angular velocity *ω* is, for example, represented by the following equation: $ω = \left(P/2\right) \times \left(N rpm/60\right) \times 2 π$ (*P*: number of magnetic poles, *N*: rotation speed of crankshaft)

At high rotation speeds of the engine of the straddled vehicle, a high induced electromotive force *E* is generated in the winding due to an increase in *φ·ω*. In the configuration where the number of magnetic poles is greater than 2/3 the number of teeth, it appears that the induced electromotive force *E* increases as the angular velocity *ω* increases. However, allowing the number of magnetic poles to be greater than 2/3 the number of teeth under the condition of maintaining the same size and weight of the permanent magnet motor generator results in a decrease in the physical size of each magnetic pole and a reduction in the magnetic flux *φ* linked with the winding. In other words, the reduction in the magnetic flux *φ* acts to offset the increase in the angular velocity *ω*. Thus, the change in the induced electromotive force *E* resulting from a greater number of magnetic poles is minimized.

The field-weakening control performed by the control unit can suppress the induced electromotive force that increases at high rotation speeds. In the configuration where the number of magnetic poles is greater than 2/3 the number of teeth, the angular velocity *ω* in the component *L·ω·Id* for the suppression through the field-weakening control is higher than in a configuration where the number of magnetic poles is less than or equal to 2/3 the number of teeth. In the permanent magnet motor generator where the number of magnetic poles is greater than 2/3 the number of teeth, therefore, the level of suppression of the induced electromotive force that is achieved through the field-weakening control is higher than in a configuration where the number of magnetic poles is less than or equal to 2/3 the number of teeth.

The reactance L·ω of the winding constitutes, together with the pure resistance, internal impedance Z of the winding. The impedance Z is a factor that opposes the current in the winding.

The field-weakening current Id is a component of current that is controlled by the control unit. The field-weakening current Id also flows in a manner that opposes the impedance Z of the winding. As described above, the reactance that constitutes part of the impedance of the winding is *L·ω*, and an increase in the angular velocity ω increases the reactance component, which manifests as an increase in the impedance. The control unit performs, for example, control through the ON-time duty ratio so that the field-weakening current Id is maintained at a target value regardless of changes in the impedance *Z*. However, once the impedance Z increases to the point where the controllable range is exceeded, such as when the duty ratio reaches an upper limit thereof, the control unit can no longer maintain the field-weakening current Id at a desired target value.

By performing the field-weakening control using the high voltage as power, the control unit according to the present disclosure can control the field-weakening current Id so that the field-weakening current Id is maintained at a target value by overcoming the increased impedance Z resulting from the increased reactance *L·ω*. That is, the control unit can maintain the field-weakening current Id at a target value even at high rotation speeds of the engine of the straddled vehicle despite the increased reactance L·ω due to the configuration where the number of magnetic poles is greater than 2/3 the number of teeth.

As described above, the high voltage is used as power to perform the field-weakening control on the permanent magnet motor generator where the number of magnetic poles is greater than 2/3 the number of teeth. This configuration produces a synergistic effect of enabling a higher level of voltage suppression to take effect at higher rotation speeds of the engine through the field-weakening control.

The synergistic effect of enabling a higher level of voltage suppression to take effect at higher rotation speeds through the field-weakening control makes it possible for the high-voltage-compatible permanent magnet motor generator to reduce terminal output voltage fluctuations over a wide rotation speed range of the engine of the straddled vehicle, from low to high rotation speeds. This reduces variation in the voltage supplied from the permanent magnet motor generator to the high-voltage power supply system via the control unit with changes in the rotation speed. Consequently, it is possible to supply a high voltage with reduced fluctuations over a wide rotation speed range of the engine of the straddled vehicle without providing a high-voltage battery for the high-voltage power supply system and without providing a reduction mechanism such as a belt or a chain for the engine.

PTL 3 discloses an example where field-weakening control is performed on a motor generator including a rotor that is fixed to a crankshaft and in which the number of magnetic pole portions is 4/3 of the number of slots. However, the control unit in PTL 3 controls the starter generator while refraining from applying a voltage higher than the battery voltage of the low-voltage battery.

In contrast, the technology of the present disclosure takes an approach that is the opposite of the idea of PTL 3 where the control unit performs control while refraining from applying a voltage higher than the voltage of the low-voltage battery. That is, the technology of the present disclosure intentionally uses, as power, a high voltage that is higher than the voltage of the low-voltage battery to perform a field-weakening control on the permanent magnet motor generator where the number of magnetic poles is greater than 2/3 the number of teeth. Thus, the control unit can maintain the field-weakening current Id even at high rotation speeds despite the increased reactance L·ω due to the configuration for increasing the reactance component, where the number of magnetic poles is greater than 2/3 the number of teeth. That is, the effect of the field-weakening control enhanced by the increased angular velocity ω can be produced over a wide rotation speed range of the engine of the straddled vehicle despite the increased angular velocity *ω*.

According to the technology of the present disclosure, because of the synergistic effect of enabling a higher level of voltage suppression to take effect at higher rotation speeds through the field-weakening control, it is possible to reduce voltage fluctuations over a wide rotation speed range of the engine of the straddled vehicle, including high rotation speeds. According to the technology of the present disclosure, therefore, it is possible to achieve a high-voltage hybrid system that is compact and lightweight, and capable of accommodating the rotation speed range of an engine of the straddled vehicle.

### Solution to the Problem

In order to achieve the objective described above, a vehicle according to an aspect of the present teaching has the following configuration.
(1) A straddled vehicle including:
   an engine having a crankshaft and configured to output torque via the crankshaft;
   a drive wheel configured to receive at least a portion of the torque outputted from the engine and mechanically transmitted thereto to drive the straddled vehicle;
   a high-voltage power supply system configured to operate at a high voltage that is higher than a low voltage of a low-voltage power supply system having a low-voltage battery connected thereto;
   a first permanent magnet motor generator configured to transfer electric power to and from the high-voltage power supply system, apply torque to the drive wheel by motoring, and generate electric power by receiving torque from the engine or the drive wheel, the first permanent magnet motor generator including a stator and a rotor, the stator having a plurality of teeth arranged in a circumferential direction and a winding wound around each of the plurality of teeth, the rotor having magnetic poles and being provided on a rotary shaft that is coaxial with and rotates at the same speed as the crankshaft;
   a first MG control unit electrically connected to the high-voltage power supply system without being connected to a battery and also electrically connected to the first permanent magnet motor generator, and configured to control the motoring and the electric power generation by the first permanent magnet motor generator; and
   a first power transfer device electrically connected to the high-voltage power supply system without being connected to a battery that functions at the high voltage and configured to transfer electric power to and from the high-voltage power supply system, the first power transfer device being any one of: a capacitor;
      a permanent magnet turbo motor generator provided in an electric turbo charger;
      a permanent magnet supercharger motor generator provided in an electric supercharger; or
      a second permanent magnet motor generator that is separate from the first permanent magnet motor generator and that provides motoring and generates electric power, wherein
   the first MG control unit uses, as power, the high voltage that is higher than the low voltage of the low-voltage battery to perform a field-weakening control on the first permanent magnet motor generator including the rotor that rotates at the same speed as the engine of the straddled vehicle and in which the number of the magnetic poles is greater than 2/3 the number of the teeth so that the level of voltage suppression that is achieved through the field-weakening control increases because of increased reactance resulting from a greater number of magnetic poles of the first permanent magnet motor generator, and so that a component of current for the field-weakening control is supplied to the winding by overcoming increased reactance at high rotation speeds of the engine of the straddled vehicle because of the field-weakening control using the high voltage as power.

The straddled vehicle described in (1) includes an engine, a drive wheel, a high-voltage power supply system, a first permanent magnet motor generator, and a first MG (Motor Generator) control unit.

The engine has a crankshaft. The engine outputs torque via the crankshaft. The drive wheel drives the straddled vehicle. At least a portion of the torque outputted from the engine is mechanically transmitted to the drive wheel.

The high-voltage power supply system operates at a high voltage. The high voltage refers to a voltage higher than a low voltage of a low-voltage power supply system having a low-voltage battery connected thereto. The first permanent magnet motor generator includes a stator and a rotor. The stator has a plurality of teeth and a winding. The plurality of teeth is arranged in the circumferential direction. The winding is wound around each of the plurality of teeth. The rotor is provided on a rotary shaft that is coaxial with and rotates at the same speed as the crankshaft. The rotor has magnetic poles. The first permanent magnet motor generator transfers electric power to and from the high-voltage power supply system. The first permanent magnet motor generator applies torque to the drive wheel by motoring. The first permanent magnet motor generator generates electric power by receiving torque from the engine or the drive wheel. The first MG control unit is electrically connected to the high-voltage power supply system without being connected to a battery. The battery is a secondary battery. The first MG control unit is also electrically connected to the first permanent magnet motor generator. The first MG control unit controls the motoring and the electric power generation by the first permanent magnet motor generator.

The straddled vehicle is a hybrid vehicle. The engine, the drive wheel, the high-voltage power supply system, the first permanent magnet motor generator, and the first MG control unit are included in a high-voltage hybrid system of the straddled vehicle.

The straddled vehicle also includes a first power transfer device. The first power transfer device is electrically connected to the high-voltage power supply system without being connected to a battery. The first power transfer device transfers electric power to and from the first permanent magnet motor generator. The first power transfer device is any one of: a capacitor; a permanent magnet turbo motor generator provided in an electric turbocharger; a permanent magnet supercharger motor generator provided in an electric supercharger; or a second permanent magnet motor generator. The second permanent magnet motor generator is separate from the first permanent magnet motor generator, and it provides motoring and generates electric power.

The straddled vehicle is configured so that the posture of the vehicle is controlled during travel with shifts in a rider's body weight. From the perspectives of operability and travel performance, therefore, there is a tendency of desire for the straddled vehicle to be compact and lightweight. Accordingly, there is also a tendency of desire for the hybrid system that is mounted to the straddled vehicle and components thereof to be compact and lightweight. In a case where a motor generator having a configuration compatible with high voltage is driven by the engine of the straddled vehicle that operates over a wide rotation speed range, the induced electromotive force of the motor generator may become excessively high at high rotation speeds of the engine of the straddled vehicle, and the terminal voltage of the motor generator may exceed a controllable range of the control unit.

The first MG control unit in the straddled vehicle described in (1) uses, as power, the high voltage that is higher than the low voltage of the low-voltage battery to perform a field-weakening control on the first permanent magnet motor generator including the rotor that rotates at the same speed as the engine of the straddled vehicle and in which the number of magnetic poles is greater than 2/3 the number of teeth. As such, the first MG control unit performs the field-weakening control using the high voltage as power so that the level of voltage suppression that is achieved through the field-weakening control increases because of increased reactance resulting from a greater number of magnetic poles of the first permanent magnet motor generator, and so that a component of current for the field-weakening control is supplied to the winding by overcoming increased reactance at high rotation speeds of the engine of the straddled vehicle because of the field-weakening control using the high voltage as power. It should be noted that the increased reactance resulting from a greater number of magnetic poles means that the number of magnetic poles is greater than 2/3 the number of teeth.

The field-weakening control performed by the control unit can suppress the induced electromotive force that increases at high rotation speeds. In the configuration where the number of magnetic poles is greater than 2/3 the number of teeth, the angular velocity ω in the component L·ω·Id for the suppression through the field-weakening control is higher than in a configuration where the number of magnetic poles is less than or equal to 2/3 the number of teeth. In the permanent magnet motor generator where the number of magnetic poles is greater than 2/3 the number of teeth, therefore, the level of suppression of the induced electromotive force that is achieved through the field-weakening control is higher than in a configuration where the number of magnetic poles is less than or equal to 2/3 the number of teeth. L represents the inductance. Id represents field-weakening current that is used in the field-weakening control. ω represents the angular velocity in terms of electrical angle. L·ω represents the reactance of the winding.

The reactance L·ω of the winding constitutes, together with the pure resistance, the internal impedance Z of the winding. The impedance Z is a factor that opposes the current in the winding.

The field-weakening current Id is a component of current that is controlled by the control unit. The field-weakening current Id also flows in a manner that opposes the impedance Z of the winding. As described above, the reactance that constitutes part of the impedance of the winding is *L·ω*, and increases with an increase in the angular velocity *ω*. The control unit controls, for example, the ON-time duty ratio so that the field-weakening current Id is maintained at a target value regardless of changes in the impedance *Z*. However, once the impedance Z increases to the point where the controllable range is exceeded, such as when the duty ratio reaches an upper limit thereof, the control unit can no longer maintain the field-weakening current Id at a desired target value.

By performing the field-weakening control using the high voltage as power, the control unit according to the present disclosure can control the field-weakening current Id so that the field-weakening current Id is maintained at a target value by overcoming the increased impedance Z resulting from the increased reactance *L·ω*. That is, the control unit can maintain the field-weakening current Id at a target value even at high rotation speeds of the engine of the straddled vehicle despite the increased reactance L·ω due to the configuration where the number of magnetic poles is greater than 2/3 the number of teeth.

As described above, the high voltage is used as power to perform the field-weakening control on the permanent magnet motor generator where the number of magnetic poles is greater than 2/3 the number of teeth. This configuration produces a synergistic effect of enabling a higher level of voltage suppression to take effect at higher rotation speeds of the engine through the field-weakening control.

The synergistic effect of enabling a higher level of voltage suppression to take effect at higher rotation speeds through the field-weakening control makes it possible for the high-voltage-compatible permanent magnet motor generator to reduce terminal output voltage fluctuations over a wide rotation speed range of the engine of the straddled vehicle, from low to high rotation speeds. This reduces variation in the voltage supplied from the permanent magnet motor generator to the high-voltage power supply system via the control unit with changes in the rotation speed. Consequently, it is possible to supply a high voltage with reduced fluctuations over a wide rotation speed range of the engine of the straddled vehicle without providing a high-voltage battery for the high-voltage power supply system and without providing a reduction mechanism such as a belt or a chain for the engine.

In the straddled vehicle described in (1), the synergistic effect of enabling a higher level of voltage suppression to take effect at higher rotation speeds through the field-weakening control makes it possible to reduce voltage fluctuations over a wide rotation speed range of the engine of the straddled vehicle, including high rotation speeds. It is therefore possible to achieve a high-voltage hybrid system that is compact and lightweight, and capable of accommodating the rotation speed range of an engine of the straddled vehicle.

According to an aspect of the present teaching, the vehicle may adopt the following configuration.

(2) The straddled vehicle described in (1), further including
a starter motor configured to operate at the low voltage of the low-voltage power supply system to start the engine without motoring by the first permanent magnet motor generator, wherein
the first MG control unit uses, as power, the high voltage that is higher than the low voltage of the low-voltage battery for the operation of the starter motor to perform the field-weakening control on the first permanent magnet motor generator including the rotor that rotates at the same speed as the engine of the straddled vehicle and in which the number of the magnetic poles is greater than 2/3 the number of the teeth.

The straddled vehicle described in (2) includes a starter motor that operates at a low voltage to start the engine. Thus, it is possible to start the engine even if the first permanent magnet motor generator does not have a function for starting the engine. In general, a motor for starting the engine tends to be required to output a torque high enough to start the engine. Accordingly, for example, it is often necessary to increase the magnetic flux of the magnets. However, the starting function is omitted from the first permanent magnet motor generator, increasing the level of configuration freedom, allowing, for example, the use of weaker magnets than in a first permanent magnet motor generator having the starting function. The first MG control unit uses, as power, the high voltage that is higher than the low voltage of the low-voltage battery for the operation of the starter motor to perform the field-weakening control on the first permanent magnet motor generator including the rotor where the number of magnetic poles is greater than 2/3 the number of teeth. Because the level of design freedom is high for the induced electromotive force at high rotation speeds, which is to be suppressed through the field-weakening control using the high voltage as power, it is possible to accommodate a wider rotation speed range of the engine of the straddled vehicle. As a result, it is possible to achieve a high-voltage hybrid system that is compact and lightweight, and capable of accommodating a wider rotation speed range.

According to an aspect of the present teaching, the vehicle may adopt the following configuration.

(3) The straddled vehicle described in (1) or (2), wherein
the first power transfer device is the capacitor,
the first permanent magnet motor generator receives electric power from the capacitor to apply torque to the crankshaft by motoring, and
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

Unlike a secondary battery, neither charging nor discharging of the capacitor involves chemical reactions at its electrodes. The capacitor can therefore be smaller and lighter than a secondary battery capable of inputting and outputting the same current at the same voltage as the capacitor. The first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor where the number of magnetic poles is greater than 2/3 the number of teeth. The first permanent magnet motor generator supplies electric power to the capacitor, rather than to a secondary battery, and thus the capacitor is charged. It is therefore possible to achieve a high-voltage hybrid system that is compact and lightweight, and capable of accommodating a wider rotation speed range while expanding the range where the high voltage can be applied.

According to an aspect of the present teaching, the vehicle may adopt the following configuration.

(4) The straddled vehicle described in any one of (1) to (3), wherein
the first power transfer device is the permanent magnet turbo motor generator provided in the electric turbocharger,
the first permanent magnet motor generator receives electric power generated by the permanent magnet turbo motor generator to apply torque to the crankshaft by motoring, and
the first MG control unit uses, as power, the high voltage of the high-voltage power supply system to which the electric turbocharger is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

According to (4), it is possible to enhance the capability of the electric turbocharger using electric power generated by the first permanent magnet motor generator. Thus, it is possible to enhance the capability of the engine and to achieve downsizing of the engine. In a situation where the output of the engine is high, for example, the electric turbocharger is driven by exhaust gas from the engine, and the permanent magnet turbo motor generator can generate electric power. The first permanent magnet motor generator receives the electric power generated by the permanent magnet turbo motor generator to apply torque to the crankshaft by motoring. The first permanent magnet motor generator can assist the engine without a secondary battery that functions at a high voltage. This configuration enables downsizing of the engine in addition to the omission of a secondary battery. It is therefore possible to achieve a high-voltage hybrid system that is compact and lightweight, and capable of accommodating a wide rotation speed range while minimizing a reduction in torque or power to be transmitted to the drive wheel.

According to an aspect of the present teaching, the vehicle may adopt the following configuration.

(5) The straddled vehicle described in any one of (1) to (4), wherein
the first power transfer device is the permanent magnet supercharger motor generator provided in the electric supercharger,
the first permanent magnet motor generator receives electric power generated by the permanent magnet supercharger motor generator to apply torque to the crankshaft by motoring, and
the first MG control unit uses, as power, the high voltage of the high-voltage power supply system to which the electric supercharger is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

According to (5), it is possible to enhance the capability of the electric supercharger using electric power generated by the first permanent magnet motor generator. Thus, it is possible to enhance the capability of the engine and to achieve downsizing of the engine. Furthermore, in a situation where the speed of the electric supercharger is reduced, the permanent magnet supercharger motor generator can generate electric power using the rotary inertia of the electric supercharger. The first permanent magnet motor generator receives the electric power generated by the permanent magnet supercharger motor generator to apply torque to the crankshaft by motoring. The first permanent magnet motor generator can assist the engine without a secondary battery that functions at a high voltage. This configuration enables downsizing of the engine in addition to the omission of a secondary battery. It is therefore possible to achieve a high-voltage hybrid system that is compact and lightweight, and capable of accommodating a wide rotation speed range while minimizing a reduction in torque or power to be transmitted to the drive wheel.

According to an aspect of the present teaching, the vehicle may adopt the following configuration.

(6) The straddled vehicle described in any one of (1) to (5), wherein
the first power transfer device is the second permanent magnet motor generator,
the first permanent magnet motor generator receives electric power generated by the second permanent magnet motor generator to apply torque to the crankshaft by motoring, and
the first MG control unit uses, as power, the high voltage of the high-voltage power supply system to which the second permanent magnet motor generator is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

According to (6), it is possible to cause motoring by the second permanent magnet motor generator using electric power generated by the first permanent magnet motor generator. Furthermore, in a situation where the second permanent magnet motor generator receives torque, the second permanent magnet motor generator can generate electric power. The first permanent magnet motor generator receives the electric power generated by the second permanent magnet motor generator to apply torque to the crankshaft by motoring. The first permanent magnet motor generator can assist the engine without a secondary battery that functions at a high voltage. This configuration enables downsizing of the engine in addition to the omission of a secondary battery. It is therefore possible to achieve further reductions in size and weight of the high-voltage hybrid system of the straddled vehicle, and to enable the high-voltage hybrid system to accommodate a wide rotation speed range.

According to an aspect of the present teaching, the vehicle may adopt the following configuration.

(7) The straddled vehicle described in any one of (1) to (6), wherein
the first power transfer device is the second permanent magnet motor generator mechanically connected to a rotary shaft provided in a torque transmission path between the crankshaft and the drive wheel,
the first permanent magnet motor generator receives electric power generated by the second permanent magnet motor generator to apply torque to the crankshaft by motoring, and
the first MG control unit uses, as power, the high voltage of the high-voltage power supply system to which the second permanent magnet motor generator is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

According to (7), it is possible to cause motoring by the second permanent magnet motor generator using electric power generated by the first permanent magnet motor generator. Thus, for example, the second permanent magnet motor generator can drive the drive wheel from a position on a different transmission path from the engine. It is therefore possible to obtain a higher level of design freedom for the traveling state of the straddled vehicle. Furthermore, in a situation where the rotation speed of the second permanent magnet motor generator is high, the second permanent magnet motor generator can generate electric power. The first permanent magnet motor generator receives the electric power generated by the second permanent magnet motor generator to apply torque to the crankshaft by motoring. The first permanent magnet motor generator can assist the engine at a high voltage without a secondary battery that functions at a high voltage. This configuration enables downsizing of the engine in addition to the omission of a secondary battery. It is therefore possible to achieve a high-voltage hybrid system that is compact and lightweight, and capable of accommodating a wide rotation speed range.

According to an aspect of the present teaching, the vehicle may adopt the following configuration.

(8) The straddled vehicle described in any one of (1) to (7), wherein
the first power transfer device is the capacitor,
the straddled vehicle further includes a second power transfer device that is any one of:
   the permanent magnet turbo motor generator provided in the electric turbocharger;
   the permanent magnet supercharger motor generator provided in the electric supercharger; or
   the second permanent magnet motor generator that is separate from the first permanent magnet motor generator and that provides motoring and generates electric power, and
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

Unlike a secondary battery, charging and discharging of the capacitor do not involve chemical reactions at its electrodes. The capacitor can therefore be smaller and lighter than a secondary battery capable of inputting and outputting the same current at the same voltage as the capacitor. The first MG control unit uses, as power, the high voltage of the high-voltage power supply system to which at least the capacitor is connected, the high voltage being higher than the low voltage of the low-voltage battery, to perform the field-weakening control on the first permanent magnet motor generator including the rotor where the number of magnetic poles is greater than 2/3 the number of teeth. The first permanent magnet motor generator supplies electric power to the capacitor, rather than to a secondary battery, and thus the capacitor is charged. It is therefore possible to achieve a high-voltage hybrid system that is compact and lightweight, and capable of accommodating a wider rotation speed range while expanding the range where the high voltage can be applied.

According to an aspect of the present teaching, the vehicle may adopt the following configuration.

(9) The straddled vehicle described in (8), wherein
the second power transfer device receives electric power from both the capacitor and the first permanent magnet motor generator to provide motoring, and
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

The second power transfer device in (9) receives a large amount of electric power from both the capacitor and the first permanent magnet motor generator to provide motoring. The first permanent magnet motor generator supplies electric power to the capacitor, rather than to a secondary battery, and thus the capacitor is charged. It is therefore possible to achieve a high-voltage hybrid system that is compact and lightweight, and capable of accommodating a wider rotation speed range while expanding the range where the high voltage can be applied.

The terminology used herein is for defining particular embodiments only and is not intended to be limiting the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. Terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This description describes a novel straddled vehicle. In the description given below, for the purposes of explanation, a number of specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The straddled vehicle refers to a vehicle of a type including a saddle on which a rider sits astride. The straddled vehicle is configured so that the posture of the vehicle is controlled during travel with shifts in the rider's body weight. Examples of straddled vehicles include scooters, mopeds, off-road motorcycles, and on-road motorcycles. The straddled vehicle is not limited to motorcycles, and may be, for example, three-wheeled or four-wheeled buggies, which are referred to as ATVs (All Terrain Vehicles), and snowmobiles. The straddled vehicle is, for example, a leaning vehicle that makes a turn in a leaning posture. During a turn, the leaning vehicle leans toward the center of the turn. The leaning vehicle is, for example, a motorcycle or a motor tricycle. The straddled vehicle according to the present disclosure is a vehicle that is driven by output of the engine. The straddled vehicle, for example, does not encompass bicycles. The leaning vehicle leans toward the center of a curve through operations including shifts in the rider's body weight. The posture of the straddled vehicle is controlled by the rider. Due to this characteristic, it is preferable that the straddled vehicle achieve further reductions in size and weight.

The engine is an internal combustion engine. The engine is, for example, a single-cylinder engine or an engine having a plurality of cylinders. The engine is, for example, a four-stroke engine or a two-stroke engine. The engine of the straddled vehicle refers to an engine mounted to the straddled vehicle.

The drive wheel refers to a wheel that drives the straddled vehicle. The straddled vehicle may include wheels other than the drive wheel. For example, the straddled vehicle includes a front wheel and a rear wheel. In this case, the drive wheel may be the rear wheel, the front wheel, or both the front and rear wheels.

The high-voltage power supply system refers to a system for transmitting a high voltage. The high voltage refers to a voltage higher than a low voltage of the low-voltage power supply system. In a configuration of the straddled vehicle including a system for transmitting a high voltage and a system for transmitting a low voltage that are distinct from each other, the system for transmitting a high voltage is the high-voltage power supply system. The high voltage in the high-voltage power supply system means at least a voltage present when the engine is in combustion operation. In a situation where the engine is in a stopped state, the voltage in the high-voltage power supply system may be a low voltage including zero voltage.

The high voltage in the straddled vehicle is, for example, a voltage greater than 24 V. In this case, the low voltage is a voltage less than or equal to 24 V. The high voltage may be, for example, a voltage greater than 12 V. In this case, the low voltage is a voltage less than or equal to 12 V.

In a case where the high voltage in the straddled vehicle does not exceed 60 V, for example, the straddled vehicle operates within an "extra-low voltage" (extra low voltage: ELV or safety extra low voltage: SELV) range defined by the International Electrotechnical Commission (IEC) standard IEC60950. In this case, a degree of insulation in the power supply system is sufficient within the range of "operational insulation", allowing for a size reduction in the wiring area. However, the high voltage in the straddled vehicle is not particularly limited, and may be, for example, greater than or equal to 60 V.

The secondary battery and the capacitor are devices that can be charged and can be discharged.

The secondary battery is a rechargeable battery. The secondary battery is charged and is discharged through chemical reactions at its electrodes. The secondary battery is charged and is discharged through oxidation and reduction reactions at the electrodes. The secondary battery stores electrical energy supplied through charging as chemical energy. The secondary battery converts the stored chemical energy back into electrical energy.

Neither charging nor discharging of the capacitor involves chemical reactions at its electrodes. The capacitor stores supplied electrical energy as electric charge.

The permanent magnet motor generator is a rotary electric machine that combines a motor function and a generator function. The permanent magnet motor generator generates a magnetic field using permanent magnets. The permanent magnet motor generator does not include an induction machine or an alternator that generates a magnetic field using an electromagnet.

The permanent magnet motor generator is, for example, of outer-rotor type. However, the permanent magnet motor generator is not particularly limited and may be, for example, of inner-rotor type. The permanent magnet motor generator is, for example, a surface permanent magnet (SPM) motor. However, the permanent magnet motor generator is not particularly limited and may be, for example, an interior permanent magnet (IPM) motor.

The first permanent magnet motor generator where the number of magnetic poles is greater than 2/3 the number of teeth is, for example, a permanent magnet motor generator where the number of magnetic poles is greater than or equal to 4/3 of the number of teeth.

Examples of such permanent magnet motor generators include a permanent magnet motor generator where the number of magnetic poles is 4/3 of the number of teeth. However, the relationship between the number of magnetic poles and the number of teeth in the permanent magnet motor generator is not particularly limited as long as the number of magnetic poles is greater than 2/3 the number of teeth. Examples of configurations that satisfy such a relationship include configurations where the number of magnetic poles is 5/6, 8/9, 11/12, 13/12, or 14/12 the number of teeth.

In the configuration where the number of magnetic poles is greater than 2/3 the number of teeth, the angular velocity ω is greater, resulting in an increased reactance at high rotation speeds. Consequently, the suppression effect of voltage fluctuation by field weakening control is high. For example, in a configuration where the number of magnetic poles is a multiple of two, such as a configuration where the number of magnetic poles is 4/3 the number of teeth, it is easy to form and arrange pairs of magnetic poles in the circumferential direction. In a configuration where the number of teeth is a multiple of three, the first permanent magnet motor generator can operate highly efficiently with a three-phase drive current. In a configuration where the number of magnetic poles is less than or equal to 4/3 the number of teeth, it is possible to sustain a sufficient magnetic flux density at each magnetic pole while maintaining the size and the weight of the permanent magnet motor generator.

The rotary shaft on which the rotor is provided, i.e., the rotary shaft that is coaxial with and rotates at the same speed as the crankshaft, is, for example, the crankshaft itself. In this case, the rotor is provided on a portion of the crankshaft. However, the rotary shaft is not particularly limited and may be separate from the crankshaft, disposed coaxially with the crankshaft, and coupled to the crankshaft using a coupling member such as a connecting sleeve. However, for example, a shaft connected to the crankshaft via a planetary gear does not fall under the definition of the rotary shaft that is coaxial with and rotates at the same speed as the crankshaft, because such a shaft does not rotate at the same speed as the crankshaft.

The turbocharger is a device that utilizes exhaust gas from the engine as a power source to supercharge the engine. The electric turbocharger refers to a turbocharger including a permanent magnet turbo motor generator provided on a rotary shaft of a turbine that rotates using the energy of exhaust gas and a compressor that compresses intake air.

The electric supercharger is a device that supercharges the engine by driving a compressor using a permanent magnet supercharger motor generator. The electric supercharger may operate using, in addition to the drive provided by the permanent magnet supercharger motor generator, a power source other than exhaust gas.

The first MG control unit includes, for example, a processor that executes programs and memory that stores the programs and data. The control unit is, for example, realized through the processor executing a program stored in the memory. However, the structure of the control unit is not particularly limited and may be a logic circuit that processes data without relying on a processor or a program.

The first MG control unit may additionally include, for example, a function for controlling the engine. However, the first MG control unit is not particularly limited and may be, for example, separate from a control unit for controlling the engine.

The field-weakening control refers to controlling the current in the winding so that a component of current that weakens the magnetic field produced by the permanent magnets of the motor generator flows through the winding. The component of current that weakens the magnetic field corresponds to a d-axis component out of q-axis and d-axis components in a vector control scheme. However, no particular limitations are placed on the control method as long as the component of current that weakens the magnetic field flows through the winding as a result of the control. The control method may be, for example, phase control, which directly controls the phase of the current relative to the phase of the electrical angle, without explicitly processing the d-axis component.

The rotary shaft provided in the torque transmission path between the crankshaft and the drive wheel is, for example, an input shaft or an output shaft of a transmission device. However, the rotary shaft is not particularly limited and may be a rotary shaft other than that of a transmission device.

### Advantageous Effects of Invention

According to the present teaching, it is possible to provide a straddled vehicle including a high-voltage hybrid system that is compact and lightweight, and capable of accommodating the rotation speed range of an engine of the straddled vehicle.

### Brief Description of Drawings

[FIG. 1] A diagram illustrating a straddled vehicle according to a first embodiment.
[FIG. 2] A chart schematically illustrating the action of field-weakening control in a first permanent magnet motor generator shown in FIG. 1.
[FIG. 3] A block diagram illustrating flows of current in a high-voltage hybrid system shown in FIG. 1.
[FIG. 4] A block diagram illustrating a second embodiment.
[FIG. 5] A block diagram illustrating a third embodiment.
[FIG. 6] A block diagram illustrating a fourth embodiment.
[FIG. 7] A block diagram illustrating a fifth embodiment.
[FIG. 8] A block diagram illustrating a sixth embodiment.

### Description of Embodiments

The following describes straddled vehicles according to some embodiments with reference to the drawings. It should be noted that the embodiments described below are merely examples. The present teaching should never be construed in a limited way based on the embodiments described below.

### [First Embodiment]

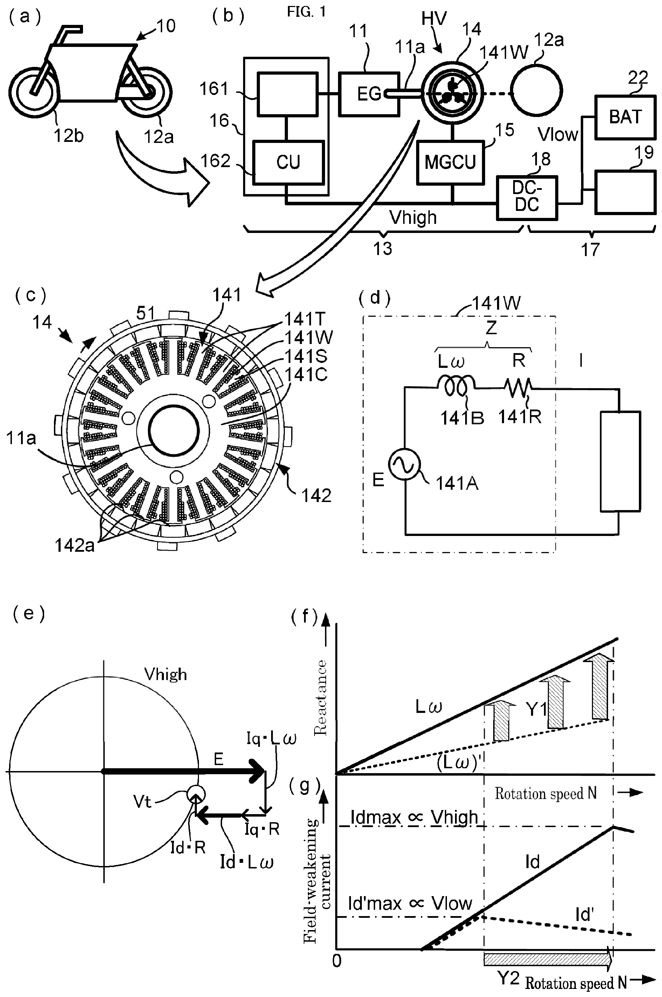

FIG. 1 is a diagram illustrating a straddled vehicle according to a first embodiment. Part (a) of FIG. 1 is a schematic side view of the straddled vehicle. Part (b) of FIG. 1 is a block diagram showing an outline configuration of a high-voltage hybrid system for the straddled vehicle. Part (c) of FIG. 1 is a side view of an example of a detailed configuration of a first permanent magnet motor generator shown in Part (b) of FIG. 1.
Part (d) of FIG. 1 is a block diagram showing an equivalent circuit of a winding in the first permanent magnet motor generator. Part (e) of FIG. 1 is a vector diagram illustrating the action of field-weakening control. Part (f) of FIG. 1 is a graph showing characteristics of reactance versus rotation speed. Part (g) of FIG. 1 is a graph showing characteristics of field-weakening current versus rotation speed.

A straddled vehicle 10 shown in FIG. 1 includes an engine (EG) 11, a drive wheel 12a, a high-voltage power supply system 13, a first permanent magnet motor generator 14, and a first MG control unit (MGCU) 15.

The engine 11 has a crankshaft 11a. The engine 11 generates power through combustion of a gas mixture containing air and fuel. The engine 11 outputs power in the form of rotational torque. The engine 11 outputs torque via the crankshaft 11a.

The drive wheel 12a drives the straddled vehicle 10. The straddled vehicle 10 has a plurality of wheels 12a and 12b. The wheel 12a serves as the drive wheel 12a. At least a portion of the torque outputted from the engine 11 is mechanically transmitted to the drive wheel 12a.

The high-voltage power supply system 13 sends electricity at a high voltage Vhigh higher than a low voltage Vlow of a low-voltage power supply system 17. No batteries are connected to the high-voltage power supply system 13. The straddled vehicle 10 does not have a battery that operates at the high voltage *Vhigh*. In the example shown in FIG. 1, the low-voltage power supply system 17 is connected to the high-voltage power supply system 13 with a DC-DC converter 18 therebetween. The high voltage Vhigh of the high-voltage power supply system 13 is converted to the low voltage Vlow by the DC-DC converter 18 and supplied to the low-voltage power supply system 17. A low-voltage device 19, which operates at the low voltage *Vlow*, is connected to the low-voltage power supply system 17. A low-voltage battery 22, which operates at the low voltage *Vlow*, is connected to the low-voltage power supply system 17.

The first permanent magnet motor generator 14 is electrically connected to the high-voltage power supply system 13. More specifically, the first permanent magnet motor generator 14 is electrically connected to the high-voltage power supply system 13 with the first MG control unit (MGCU) 15 therebetween. The first permanent magnet motor generator 14 applies torque to the drive wheel 12a by motoring. More specifically, the first permanent magnet motor generator 14 applies torque to the crankshaft 11a by motoring. For example, the first permanent magnet motor generator 14 assists the driving by the engine 11 by motoring. The first permanent magnet motor generator 14 generates electric power by receiving torque from the engine 11 or the drive wheel 12a. The first MG control unit 15 controls the motoring and the electric power generation by the first permanent magnet motor generator 14.

The straddled vehicle 10 is a hybrid vehicle. The straddled vehicle 10 includes a high-voltage hybrid system HV. The engine 11, the drive wheel 12a, the high-voltage power supply system 13, the first permanent magnet motor generator 14, and the first MG control unit 15 are included in the high-voltage hybrid system HV of the straddled vehicle 10.

The straddled vehicle 10 further includes a first power transfer device 161. The first power transfer device 161 is electrically connected to the high-voltage power supply system 13 without being connected to a battery that operates at the high voltage *Vhigh*.

The first power transfer device 161 according to the present embodiment is, for example, a permanent magnet turbo motor generator (eTC) 161 of an electric turbocharger 16. In the present embodiment, the first power transfer device 161 is also referred to as the permanent magnet turbo motor generator 161. The electric turbocharger 16 is a device that harnesses exhaust gas from the engine 11 as a power source to supercharge the engine 11. The electric turbocharger 16 includes the permanent magnet turbo motor generator (eTC) 161. The permanent magnet turbo motor generator 161 is provided on a rotary shaft of a turbine, not shown, that rotates using the energy of exhaust gas and a compressor, not shown, that compresses intake air. The first power transfer device 161 also has a control unit (CU). For example, the electric turbocharger 16, which serves as the first power transfer device 161, also has a turbo control unit (eTCCU) 162 that controls the permanent magnet turbo motor generator 161. Specifically, the first power transfer device 161 is electrically connected to the high-voltage power supply system 13 with the turbo control unit 162 therebetween.

As shown in Part (c) of FIG. 1, the first permanent magnet motor generator 14 in the straddled vehicle 10 includes a stator 141 and a rotor 142.

The stator 141 has a plurality of teeth 141T arranged in the circumferential direction, i.e., in the rotational direction of the rotor 142, and a winding 141W wound around each of the plurality of teeth 141T. More specifically, the plurality of teeth 141T is arranged so as to be separated by slots 141S.

The rotor 142 is provided on a rotary shaft that is coaxial with and rotates at the same speed as the crankshaft 11a.

In the present embodiment, the rotary shaft that is coaxial with and rotates at the same speed as the crankshaft 11a is the crankshaft 11a itself. The rotor 142 is mechanically connected to an end part of the crankshaft 11a. In other words, the first permanent magnet motor generator 14 is connected to the end part of the crankshaft 11a. The rotor 142 has magnetic poles 142a, and the number of magnetic poles 142a is greater than 2/3 the number of teeth 141T. In the rotor 142 according to the present embodiment, the number of magnetic poles 142a is 4/3 of the number of teeth 141T. The magnetic poles 142a are arranged in the rotational direction. The magnetic poles 142a are composed of permanent magnets.

The example shown in FIG. 1 shows a structure where the same number of permanent magnets as the magnetic poles 142a are arranged in the circumferential direction. However, no particular limitations are placed on the structure of the magnetic poles 142a. For example, the magnetic poles 142a may have a structure where a single cylindrical permanent magnet is magnetized so that a plurality of magnetic poles 142a is generated, or a structure where a cylindrical permanent magnet is divided into two or three blocks and magnetized so that a plurality of magnetic poles 142a is generated on each block.

The first permanent magnet motor generator 14 is electrically connected to the permanent magnet turbo motor generator 161, which is the first power transfer device, with the first MG control unit 15 therebetween. The first MG control unit 15 performs motoring and electric power generation control including field-weakening control. The first permanent magnet motor generator 14 transfers electric power to and from the permanent magnet turbo motor generator 161 via the first MG control unit 15, without using a battery.

In the configuration of the first permanent magnet motor generator 14 where the number of magnetic poles 142a is greater than 2/3 the number of teeth 141T, angular velocity ω in terms of electrical angle is greater relative to the mechanical rotation speed of the rotor 142 than, for example, in a configuration where the number of magnetic poles 142a is less than or equal to 2/3 the number of teeth 141T. The mechanical rotation speed refers to the number of rotations of the rotor 142 per unit time. In contrast, the angular velocity in terms of electrical angle is defined as the rotational angle based on the periodic repetition of a pair of magnetic poles 142a passing in the vicinity of a single tooth 141T.

The first MG control unit 15 uses, as power, the high voltage Vhigh that is higher than the low voltage of the low-voltage battery 22 to perform a field-weakening control on the first permanent magnet motor generator 14 including the rotor 142 that rotates at the same speed as the engine 11 of the straddled vehicle 10 and in which the number of magnetic poles 142a is greater than 2/3 the number of teeth 141T. As such, the first MG control unit 15 performs the field-weakening control using the high voltage Vhigh as power so that the level of voltage suppression that is achieved through the field-weakening control increases because of increased reactance Lω resulting from a greater number of magnetic poles 142a of the first permanent magnet motor generator 14, and so that a component of current for the field-weakening control is supplied to the winding 141W by overcoming increased reactance Lω at high rotation speeds of the engine 11 of the straddled vehicle 10 because of the field-weakening control using the high voltage Vhigh as power.

As represented by the equivalent circuit in Part (d) of FIG. 1, the winding 141W electrically includes an alternating-current voltage source 141A, an inductor 141B, and a resistor 141R.

Induced electromotive force E that is outputted by the alternating-current voltage source 141A depends on the angular velocity ω. More specifically, the induced electromotive force E primarily depends on the product of the angular velocity ω and the magnetic flux *φ* linked with the winding 141W.

Inductance L of the inductor 141B primarily depends on the magnetic flux linked with the winding 141W. The product *L·ω* of the angular velocity ω and the inductance L represents the reactance of the winding 141W. The reactance is denoted as *L·ω* or *Lω.*

Resistance R of the resistor 141R represents winding resistance. The impedance Z of the winding 141W can be approximately expressed as follows. ${\left({\left(Lω\right)}^{∧}2+{R}^{∧}2\right)}^{∧} 1 / 2$

In a vector diagram in Part (e) of FIG. 1, Vhigh indicates the magnitude of the high voltage of the high-voltage power supply system 13. E indicates the induced electromotive force. Id indicates a d-axis current component, which corresponds to the field-weakening current. Iq indicates a q-axis current component.

Since the induced electromotive force E primarily depends on the product of the angular velocity ω and the magnetic flux *φ* linked with the winding 141W, the induced electromotive force E increases with an increase in the mechanical rotation speed of the first permanent magnet motor generator 14.

The voltage that is outputted from the first permanent magnet motor generator 14, which in other words is the terminal voltage, is the result of the induced electromotive force E being affected by the current flowing through the winding 141W, which in other words is the current flowing through the inductor 141B and the resistor 141R.

The current flowing through the winding 141W includes the field-weakening current Id as a component. The field-weakening current Id generates a magnetic flux along the direction of the magnetic flux generated by the magnetic poles 142a and is also referred to as the d-axis current *Id*. In contrast, the q-axis current Iq generates a magnetic flux in a direction perpendicular to the field-weakening current Id in the vector diagram. The q-axis current generates a magnetic flux in a direction perpendicular to the magnetic flux generated by the magnetic poles 142a and is used to directly control the torque of the first permanent magnet motor generator 14.

The induced electromotive force E is suppressed by voltage drops *Iq·R* and *Iq·Lω* due to the q-axis current Iq as well as by voltage drops *Id·R* and *Id·Lω* due to the field-weakening current Id.

The q-axis current Iq is, for example, a main element for generating torque in the first permanent magnet motor generator 14 and varies according to the operating state of the first power transfer device 161 and the torque of the first permanent magnet motor generator 14. For example, in a situation where the q-axis current Iq is low due to the operating state of the first power transfer device 161, the suppression by the q-axis current Iq is ineffective.

Therefore, the suppression of the induced electromotive force E at high rotation speeds is controlled particularly by the field-weakening current (d-axis current) Id through the field-weakening control by the first MG control unit 15. In particular, the induced electromotive force E is suppressed by *Id·Lω.*

In the configuration of the first permanent magnet motor generator 14 where the number of magnetic poles 142a is greater than 2/3 the number of teeth 141T, the angular velocity ω in terms of electrical angle is greater relative to the mechanical rotation speed of the rotor 142 than, for example, in a configuration where the number of magnetic poles is less than or equal to 2/3 the number of teeth.

Part (f) of FIG. 1 shows the reactance Lω in the present embodiment and, as a comparative example, the reactance (Lω)' in a configuration where the number of magnetic poles is less than or equal to 2/3 the number of teeth. As shown in Part (f) of FIG. 1, in the configuration where the number of magnetic poles 142a is greater than 2/3 the number of teeth 141T, the reactance Lω in the suppression component L·ω·Id of the field-weakening control is greater than the reactance (Lω)' in the configuration including fewer magnetic poles (Y1 in Part (f) of FIG. 1). In the first permanent magnet motor generator 14 where the number of magnetic poles 142a is greater than 2/3 the number of teeth 141T, therefore, a higher level of terminal voltage suppression is achieved through the field-weakening control.

Part (g) of FIG. 1 shows the field-weakening current Id in the present embodiment, and as a comparative example, the field-weakening current Id' that would be obtained if the control is performed using the low voltage Vlow as power, which is indicated by a broken line.

The field-weakening current Id is a component of current that is controlled by the first MG control unit 15. The first MG control unit 15 controls the field-weakening current Id to a target value corresponding to a required level of suppression. The field-weakening current Id flows in a manner that opposes the impedance Z of the winding 141W. As described above, the reactance L·ω included in the impedance Z of the winding 141W increases as the angular velocity ω increases.

Within a controllable range, the control unit controls the field-weakening current Id so that the field-weakening current Id is maintained at a target value corresponding to the suppression regardless of changes in the impedance *Z*. For example, the control unit performs control through the ON-time duty ratio as a command value for the current.

For example, as indicated by the broken line in Part (g) of FIG. 1, the field-weakening current *Id*' is controlled to a target value corresponding to the suppression of the increase in the induced electromotive force as rotation speed N increases. However, the command value for the control, such as the duty ratio, reaches an upper limit thereof at high rotation speeds and cannot increase further. A current *Id'max* at the upper limit of the command value is based on the low voltage Vlow used as power and the impedance *Z*. If the rotation speed increases after the command value has reached the upper limit, the impedance Z increases, with the command value remaining at the upper limit.

The control unit according to the present embodiment performs the field-weakening control using the high voltage Vhigh as power. Thus, for example, the maximum value Idmax of the field-weakening current Id that can be supplied through the control is higher as indicated by a solid line in Part (g) of FIG. 1. Thus, it is possible to control the field-weakening current Id so that the field-weakening current Id is maintained at a target value by overcoming the increased impedance Z resulting from the increased reactance *L·ω*. That is, even in the configuration where the number of magnetic poles 142a is greater than 2/3 the number of teeth 141T, which results in the increased reactance *L·ω*, the field-weakening current Id at high rotation speeds of the engine 11 of the straddled vehicle 10 can be maintained at a target value (arrow Y2).

As described above, the high voltage is used as power to perform the field-weakening control on the first permanent magnet motor generator 14 where the number of magnetic poles 142a is greater than 2/3 the number of teeth 141T. This configuration makes it possible to achieve a higher level of voltage suppression through the field-weakening control. Moreover, this configuration produces a synergistic effect of enabling the voltage suppression to take effect at higher rotation speeds of the engine 11 (increase in level indicated by arrows Y1 and higher rotation speeds).

As a result, voltage fluctuations can be reduced over a wide rotation speed range of the engine 11 of the straddled vehicle 10, from low to high rotation speeds. This reduces variation in the voltage supplied from the permanent magnet motor generator 14 to the high-voltage power supply system 13 via the first MG control unit 15 with changes in the rotation speed. Consequently, it is possible to supply a high voltage with reduced fluctuations over a wide rotation speed range of the engine 11 of the straddled vehicle 10 without providing a high-voltage battery for the high-voltage power supply system 13 and without providing a reduction mechanism such as a belt or a chain for the engine 11.

Thus, in the straddled vehicle 10 according to the present embodiment, the synergistic effect of enabling a higher level of voltage suppression to take effect at higher rotation speeds through the field-weakening control makes it possible to reduce voltage fluctuations over a wide rotation speed range of the engine 11 of the straddled vehicle 10, including high rotation speeds. Thus, it is possible to achieve a high-voltage hybrid system HV that is compact and lightweight, and capable of accommodating the rotation speed range of the engine 11 of the straddled vehicle 10.

The effect of the use of the high voltage as power to perform the field-weakening control on the first permanent magnet motor generator 14 where the number of magnetic poles 142a is greater than 2/3 the number of teeth 141T can be exhibited in both electric power generation and motoring.

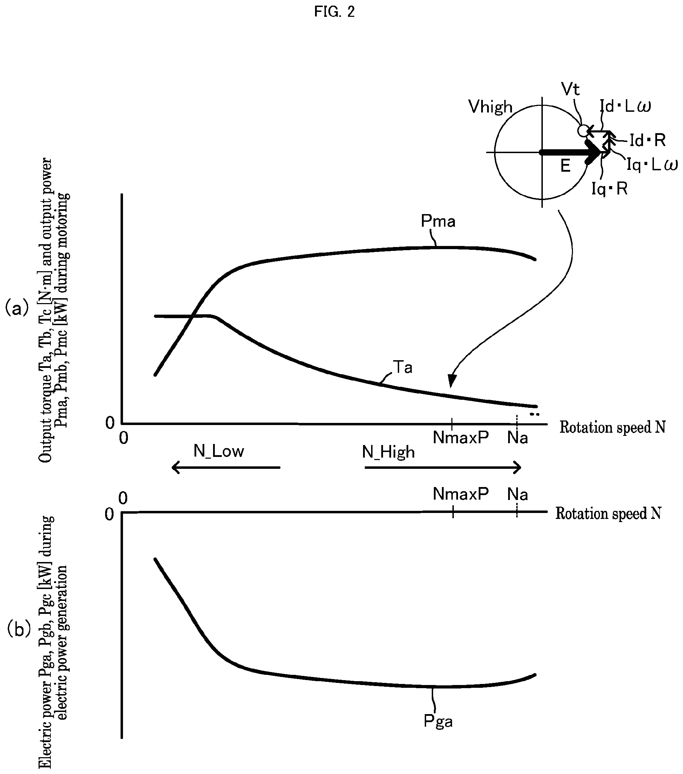

FIG. 2 is a chart schematically illustrating the action of the field-weakening control in the first permanent magnet motor generator shown in FIG. 1. Part (a) of FIG. 2 shows maximum output torque characteristics and output power characteristics versus rotation speed during motoring. Part (b) of FIG. 2 shows output electric power characteristics versus rotation speed during electric power generation. The output power of the motor generator during motoring is mechanical, whereas the output electric power during electric power generation is electrical. The motor generator is a device that converts between the mechanical power and the electric power.

Referring to Part (a) of FIG. 2, the following first describes an example of the characteristics during motoring, where the first permanent magnet motor generator 14 functions as a motor.

The first MG control unit 15 of the present embodiment performs the field-weakening control. In the field-weakening control, the first MG control unit 15 supplies a current to the winding 141W so that a magnetic field is generated in a direction opposite to the magnetic field created by the magnetic poles 142a that generate the induced electromotive force. This is equivalent to weakening the magnetic force of the magnetic poles 142a. As a result, it is possible to supply a higher current contributing to torque to the winding 141W at a maximum output rotation speed NmaxP of the engine 11.

It should be noted that the maximum output rotation speed NmaxP refers to a rotation speed at which the engine 11 produces its maximum output, and is one of indicators representing a usable speed range of the rotation speed of the engine 11. An upper limit rotation speed Na of the engine 11 is higher than the maximum output rotation speed *NmaxP*.

More specifically, as the field-weakening control, the first MG control unit 15 supplies a d-axis current that contributes to a magnetic flux in the opposite direction. An upper right section of Part (a) of FIG. 2 shows a voltage vector diagram representing the relationship between voltages during motoring at the maximum output rotation speed NmaxP of the engine 11.

As a result of the field-weakening control, the magnitude of voltage Vt at an output switching part of the first MG control unit 15 is equal to the magnitude of the high voltage Vhigh of the high-voltage power supply system 13. Specifically, the magnitude of the voltage Vt, which is obtained by combining the induced electromotive force E with the voltage drops *Iq·R* and *Iq·Lω* due to the q-axis current *Iq*, and the voltage drops *Id·R* and *Id·Lω* due to the field-weakening current *Id*, is equal to the magnitude of the high voltage Vhigh of the high-voltage power supply system 13. It should be noted that R represents the resistance of the winding 141W. L represents the inductance of the winding 141W.

In this case, at the maximum output rotation speed *NmaxP*, the first MG control unit 15 uses the voltage of the high-voltage power supply system 13 so that the first permanent magnet motor generator 14 can output torque for rotating the crankshaft 11a. In the example shown in FIG. 2, the first permanent magnet motor generator 14 can output motoring power even at the rotation speed Na higher than the maximum output rotation speed NmaxP of the engine 11.

The number of magnetic poles 142a in the first permanent magnet motor generator 14 is greater than 2/3 the number of teeth 141T. In this configuration, the angular velocity ω in terms of electrical angle of the first permanent magnet motor generator 14 operating as a starter generator is greater than, for example, in a configuration where the number of magnetic poles is less than or equal to 2/3 the number of teeth 141T. Accordingly, the field-weakening control is more effective. Furthermore, since the number of magnetic poles 142a is greater than 2/3 the number of teeth 141T, the individual magnetic poles 142a are smaller in size. The magnetic flux generated by the magnetic poles 142a is therefore more easily weakened by the magnetic field of the winding 141W through which the d-axis current flows. Consequently, at the maximum output rotation speed *NmaxP*, output torque Ta of the first permanent magnet motor generator 14 is higher than output torque Tc in a configuration where the number of magnetic poles is less than or equal to 2/3 the number of teeth 141T.

Output power Pma of the first permanent magnet motor generator 14 depends on the product of the output torque and the rotation speed. Even at the maximum output rotation speed *NmaxP*, the first permanent magnet motor generator 14 under the field-weakening control can deliver a sufficient output power *Pma*.

The first permanent magnet motor generator 14 supplied with electric power from the first power transfer device 16 via the high-voltage power supply system 13 can therefore apply sufficient driving force to the crankshaft 11a over a wide rotation speed range of the engine 11 including the maximum output rotation speed *NmaxP*. Furthermore, the first permanent magnet motor generator 14 can draw electric power generated by the first power transfer device 16 over a wide rotation speed range of the engine 11 without a secondary battery.

Referring to Part (b) of FIG. 2, the following describes an example of characteristics during electric power generation, where the first permanent magnet motor generator 14 functions as a generator.

A solid line Pma in Part (b) of FIG. 1 represents output electric power. During electric power generation by the first permanent magnet motor generator 14, the effect of the reactance L·ω of the winding 141W comes into play.

The first MG control unit 15 causes the first permanent magnet motor generator 14 to generate electric power while performing the field-weakening control using the high voltage as power.

The curve representing the output electric power Pga during electric power generation has a shape substantially symmetric to the one in Part (a) of FIG. 2.

That is, at the maximum output rotation speed *NmaxP*, the output electric power Pga of the first permanent magnet motor generator 14 under the field-weakening control is greater than, for example, that in the case without the field-weakening control.

Consequently, as the output electric power *Pga*, the first permanent magnet motor generator 14 can output electric power that exceeds the maximum electric power of the first power transfer device 16 over a wide rotation speed range including the maximum output rotation speed *NmaxP*. The first permanent magnet motor generator 14 can therefore supply sufficient electric power for the operation of the first power transfer device 16 via the high-voltage power supply system 13.

It should be noted that, by adopting vector control as a control method, the first MG control unit 15 can easily control the d-axis current and the q-axis current mentioned above explicitly and independently. However, no particular limitations are placed on the control method for the first MG control unit 15 to perform field weakening. The first MG control unit 15 can perform the field-weakening control by adjusting the current receiving timing of each phase of the winding 141W.

According to the present embodiment, the first permanent magnet motor generator 14 can operate over a range of low to high rotation speeds. The first permanent magnet motor generator 14 can operate over a wide rotation speed range including the maximum output rotation speed *NmaxP*.

According to the present embodiment, it is possible to reduce generated voltage fluctuations over a wide rotation speed range of the engine 11 of the straddled vehicle 10, from low to high rotation speeds. This reduces variation in the voltage supplied from the first permanent magnet motor generator 14 to the high-voltage power supply system 13 via the first MG control unit 15 with changes in the rotation speed. Consequently, it is possible to supply a high voltage with reduced fluctuations over a wide rotation speed range of the engine 11 of the straddled vehicle 10 without providing a high-voltage battery for the high-voltage power supply system 13 and without providing a reduction mechanism such as a belt or a chain for the engine 11.

Thus, in the straddled vehicle 10 according to the present embodiment, the synergistic effect of enabling a higher level of voltage suppression to take effect at higher rotation speeds through the field-weakening control makes it possible to reduce voltage fluctuations over a wide rotation speed range of the engine 11 of the straddled vehicle 10, including high rotation speeds. Thus, the high-voltage hybrid system HV is compact and lightweight, and capable of accommodating the rotation speed range of the engine 11 of the straddled vehicle 10.

The first power transfer device according to the present embodiment is a permanent magnet turbo motor generator 161 provided in the electric turbocharger 16. When the engine 11 operates at high rotation speeds, for example, the permanent magnet turbo motor generator 161 generates electric power. The first permanent magnet motor generator 14 receives the electric power generated by the permanent magnet turbo motor generator 161 to apply torque to the crankshaft 11a by motoring.

According to the present embodiment, it is possible to enhance the capability of the electric turbocharger 16 using electric power generated by the first permanent magnet motor generator 14. Thus, for example, it is possible to enhance the capability of the engine 11 and to achieve downsizing of the engine 11.

### [Example of First Embodiment]

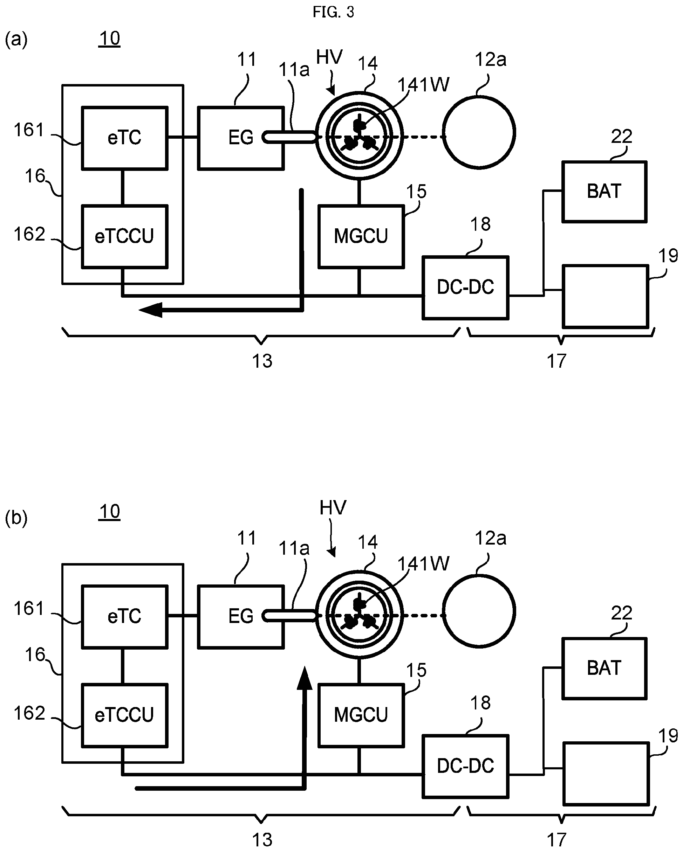

FIG. 3 is a block diagram illustrating flows of current in the high-voltage hybrid system shown in FIG. 1. Part (a) of FIG. 3 shows a state where the electric turbocharger is being assisted. Part (b) of FIG. 3 shows a state where exhaust energy is being recovered.

As shown in Part (a) of FIG. 3, upon an acceleration request being inputted during the operation of the engine 11, high-voltage electric power is supplied from the first permanent magnet motor generator 14 to the electric turbocharger 16 via the first MG control unit 15 and the high-voltage power supply system 13. The thus supplied electric power assists the electric turbocharger 16 in operation. With the electrical assistance, higher responsiveness of the supercharging function can be achieved.

As shown in Part (b) of FIG. 3, for example, in a situation where the output of the engine 11 is high, the electric turbocharger 16 is driven by exhaust gas from the engine 11. As a result, the permanent magnet turbo motor generator 161 generates electric power. The first permanent magnet motor generator 14 receives the electric power generated by the permanent magnet turbo motor generator 161 to apply torque to the crankshaft 11a by motoring. That is, the first permanent magnet motor generator 14 can assist the engine 11 without a secondary battery that functions at a high voltage. This configuration enables downsizing of the engine 11 in addition to the omission of a secondary battery. It is therefore possible to achieve further reductions in size and weight of the high-voltage hybrid system HV of the straddled vehicle 10, while minimizing a reduction in torque or power to be transmitted to the drive wheel 12a.

### [Second Embodiment]

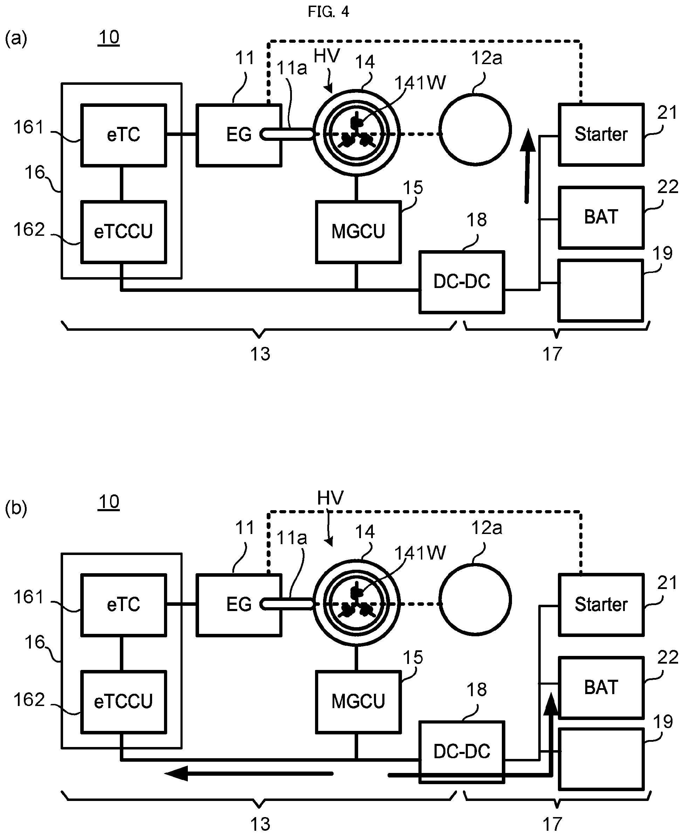

FIG. 4 is a block diagram illustrating a second embodiment. Part (a) of FIG. 4 is a block diagram showing current in a straddled vehicle 10 in an engine start state. Part (b) of FIG. 4 is a block diagram showing current in the straddled vehicle 10 in a charging state.

The straddled vehicle 10 shown in FIG. 4 includes a starter motor 21 for starting the engine 11. The starter motor 21 drives, for example, the crankshaft 11a at the time of engine start. The starter motor 21 operates at the low voltage of the low-voltage power supply system 17 to start the engine 11 without motoring by the first permanent magnet motor generator 14.

These are main differences from the first embodiment. The following mainly describes differences from the first embodiment. Elements common to the first embodiment are assigned the same reference signs as in the first embodiment, and description thereof is omitted.

The straddled vehicle 10 according to the present embodiment includes the starter motor 21 that operates at the low voltage to start the engine 11. Thus, it is possible to start the engine 11 even if the first permanent magnet motor generator 14 does not have a function for starting the engine 11.

For example, as shown in Part (a) of FIG. 4, the current flows from the low-voltage battery 22 to the starter motor 21 at the time of starting the engine 11, supplying electric power. The starter motor 21 starts the engine 11 using the electric power from the low-voltage battery 22.

After the engine 11 has been started, the first permanent magnet motor generator 14 is driven by the engine 11 and generates electric power. As shown in Part (b) of FIG. 4, the current resulting from the electric power generation by the first permanent magnet motor generator 14 flows from the high-voltage power supply system 13 to the low-voltage power supply system 17 via the DC-DC converter 18. The DC-DC converter 18 converts the high voltage resulting from the electric power generation by the first permanent magnet motor generator 14 to a low voltage. The current supplied via the DC-DC converter 18 is stored in the low-voltage battery 22.

In general, a motor for starting the engine 11 tends to be required to output a torque high enough to start the engine 11. Accordingly, for example, it is often necessary to increase the magnetic flux of the magnets. In the present embodiment, however, the starting function is omitted from the first permanent magnet motor generator 14, increasing the level of configuration freedom, allowing, for example, the use of magnets with a weaker magnetic flux to form the magnetic poles 142a.

Thus, the first permanent magnet motor generator 14 can be configured to output electric power corresponding to the high-voltage power supply system 13 over a range closer to the dynamic range of the rotation speed of the engine 11. As a result, it is possible to achieve further reductions in size and weight of the high-voltage hybrid system HV of the straddled vehicle 10.

### [Third Embodiment]

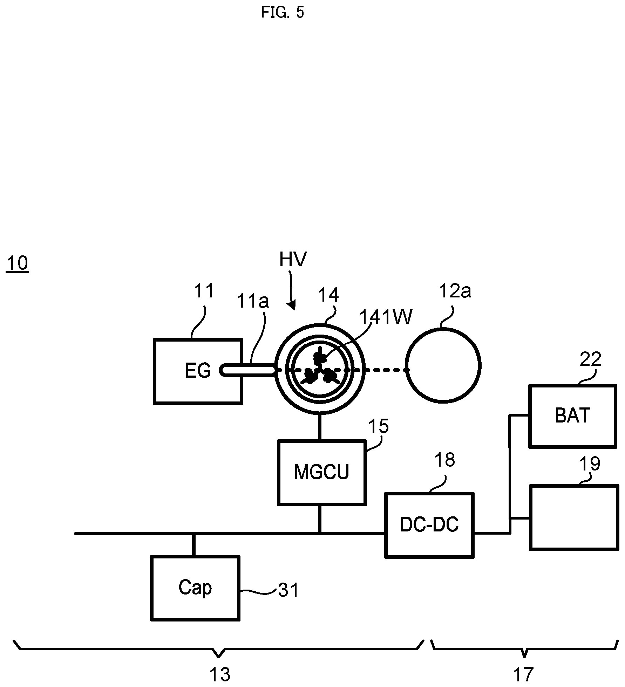

FIG. 5 is a block diagram illustrating a third embodiment.

A straddled vehicle 10 shown in FIG. 5 includes a capacitor 31 as the first power transfer device.

The capacitor 31 stores electric power in the form of charge. The capacitor 31 outputs the electric power stored in the form of charge. The first permanent magnet motor generator 14 receives the electric power from the capacitor 31 to apply torque to the crankshaft 11a by motoring.

When the first permanent magnet motor generator 14 generates electric power, the electric power outputted from the first permanent magnet motor generator 14 is stored in the capacitor 31.

These are main differences from the first embodiment. The following mainly describes differences from the first embodiment. Elements common to the first embodiment are assigned the same reference signs as in the first embodiment, and description thereof is omitted.

Unlike a secondary battery, neither charging nor discharging of the capacitor 31 involves chemical reactions at electrodes. The capacitor 31 can therefore be smaller and lighter than a secondary battery capable of inputting and outputting the same current at the same voltage as the capacitor 31.

According to the present embodiment, the first permanent magnet motor generator 14 receives electric power from the capacitor 31, rather than from a secondary battery, to apply torque to the crankshaft 11a by motoring. It is therefore possible to achieve further reductions in size and weight of the high-voltage hybrid system HV of the straddled vehicle 10, while extending the range of conditions under which torque can be applied to the crankshaft 11a.

### [Fourth Embodiment]

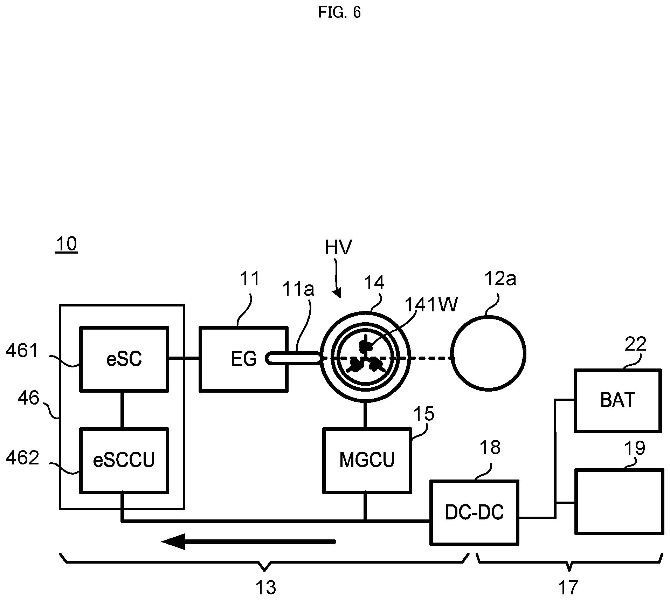

FIG. 6 is a block diagram illustrating a fourth embodiment.

A straddled vehicle 10 shown in FIG. 6 includes an electric supercharger 46 instead of the electric turbocharger 16. The first power transfer device in the present embodiment is a permanent magnet supercharger motor generator (eSC) 461 provided in the electric supercharger 46. In the present embodiment, the first power transfer device may be referred to as the permanent magnet supercharger motor generator 461. The permanent magnet supercharger motor generator 461 is controlled by a supercharger control unit 462.

The permanent magnet supercharger motor generator 461 receives electric power generated by the first permanent magnet motor generator 14 to supercharge the engine 11 by motoring.

The first permanent magnet motor generator 14 receives electric power generated by the permanent magnet supercharger motor generator 461 to apply torque to the crankshaft 11a by motoring.

These are main differences from the first embodiment. The following mainly describes differences from the first embodiment. Elements common to the first embodiment are assigned the same reference signs as in the first embodiment, and description thereof is omitted.

According to the present embodiment, it is possible to enhance the capability of the electric supercharger 46 using electric power generated by the first permanent magnet motor generator 14. The first permanent magnet motor generator 14 can supply electric power to the electric supercharger 46 without a secondary battery that functions at a high voltage. Thus, it is possible to enhance the capability of the engine 11 and to achieve downsizing of the engine 11.

Furthermore, in a situation where the electric supercharger 46 decelerates, the permanent magnet supercharger motor generator 461 can generate electric power using the rotary inertia of the electric supercharger 46. The first permanent magnet motor generator 14 receives the electric power generated by the permanent magnet supercharger motor generator 461 to apply torque to the crankshaft 11a by motoring. The permanent magnet turbo motor generator 161 can assist the engine 11 without a secondary battery that functions at a high voltage.

The present embodiment enables downsizing of the engine 11 in addition to the omission of a secondary battery. It is therefore possible to achieve further reductions in size and weight of the high-voltage hybrid system HV of the straddled vehicle 10, while minimizing a reduction in torque or power to be transmitted to the drive wheel 12a.

### [Fifth Embodiment]

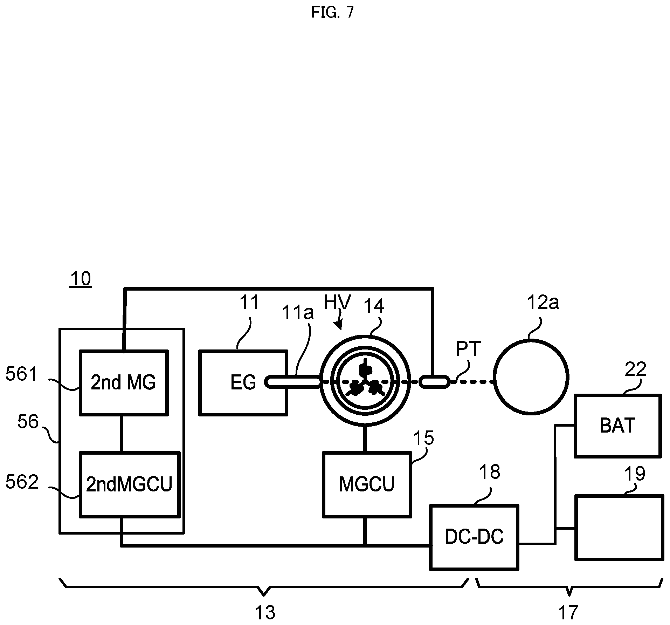

FIG. 7 is a block diagram illustrating a fifth embodiment.

A straddled vehicle 10 shown in FIG. 7 includes a second permanent magnet motor generator 56 instead of the electric turbocharger 16.

The first power transfer device in the present embodiment is a second permanent magnet motor generator 561. More specifically, the second permanent magnet motor generator 561 is mechanically connected to a rotary shaft provided in a torque transmission path PT between the crankshaft 11a and the drive wheel 12a. The rotary shaft provided in the torque transmission path PT is, for example, an input shaft or an output shaft of a transmission device, not shown. The first power transfer device in the present embodiment may be referred to as the second permanent magnet motor generator 561.

The first permanent magnet motor generator 14 receives electric power generated by the second permanent magnet motor generator 561 to apply torque to the crankshaft 11a by motoring.

These are main differences from the first embodiment. The following mainly describes differences from the first embodiment. Elements common to the first embodiment are assigned the same reference signs as in the first embodiment, and description thereof is omitted.

According to the present embodiment, it is possible to cause motoring by the second permanent magnet motor generator 561 using electric power generated by the first permanent magnet motor generator 14. The first permanent magnet motor generator 14 can supply electric power to the second permanent magnet motor generator 561 without a secondary battery that functions at a high voltage.

Furthermore, in a situation where the second permanent magnet motor generator 561 receives torque, the second permanent magnet motor generator 561 can generate electric power. The first permanent magnet motor generator 14 receives the electric power generated by the second permanent magnet motor generator 561 to apply torque to the crankshaft 11a by motoring. The first permanent magnet motor generator 14 can assist the engine 11 without a secondary battery that functions at a high voltage. This configuration enables downsizing of the engine 11 in addition to the omission of a secondary battery. As a result, it is possible to achieve further reductions in size and weight of the high-voltage hybrid system HV of the straddled vehicle 10.

Furthermore, the second permanent magnet motor generator 561 can drive the drive wheel 12a from a position on a different transmission path from the engine 11, for example. It is therefore possible to obtain a higher level of setting freedom for the traveling state of the straddled vehicle 10. Thus, it is possible to achieve further reductions in size and weight of the high-voltage hybrid system HV of the straddled vehicle 10, while obtaining a higher level of setting freedom for the traveling state of the straddled vehicle 10.

### [Sixth Embodiment]

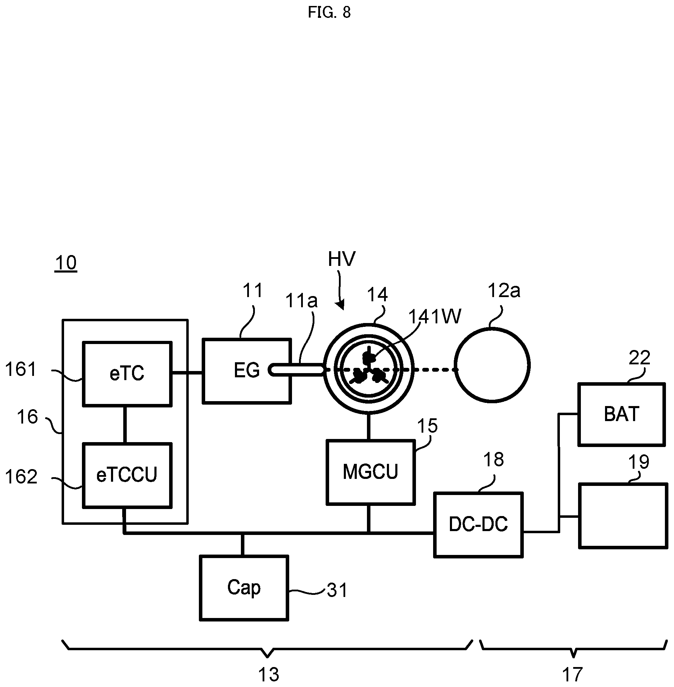

FIG. 8 is a block diagram illustrating a sixth embodiment.

A straddled vehicle 10 shown in FIG. 8 includes a capacitor 31 as the first power transfer device. The straddled vehicle 10 further includes a second power transfer device. The second power transfer device according to the present embodiment is a permanent magnet turbo motor generator 161 provided in an electric turbocharger 16.

The permanent magnet turbo motor generator 161 serving as the second power transfer device receives electric power from both the capacitor 31 and the first permanent magnet motor generator 14 to provide motoring.

These are main differences from the first embodiment. The following mainly describes differences from the first embodiment. Elements common to the first embodiment are assigned the same reference signs as in the first embodiment, and description thereof is omitted.

According to the present embodiment, the first permanent magnet motor generator 14 receives electric power from the capacitor 31, rather than from a secondary battery, to apply torque to the crankshaft 11a by motoring. It is therefore possible to achieve further reductions in size and weight of the high-voltage hybrid system HV of the straddled vehicle 10, while extending the range of conditions under which torque can be applied to the crankshaft 11a.

Moreover, even if the electric power generation by the permanent magnet turbo motor generator 161 serving as the second power transfer device does not coincide in time with the motoring by the first permanent magnet motor generator 14, the generated electric power is temporarily stored in the capacitor 31 and later used for motoring.

Conversely, even if the electric power generation by the first permanent magnet motor generator 14 does not coincide in time with the motoring by the permanent magnet turbo motor generator 161 serving as the second power transfer device, the generated electric power is temporarily stored in the capacitor 31 and later used for motoring. It is therefore possible to achieve further reductions in size and weight of the high-voltage hybrid system HV of the straddled vehicle 10, while further extending the range of conditions under which torque can be applied to the crankshaft 11a.

The permanent magnet turbo motor generator 161 serving as the second power transfer device can receive electric power from both the capacitor 31 and the first permanent magnet motor generator 14 to provide motoring. It is therefore possible to achieve further reductions in size and weight of the high-voltage hybrid system HV of the straddled vehicle 10, while enhancing the capability of the second power transfer device without a secondary battery that functions at a high voltage.

The sixth embodiment has been described using an example where the second power transfer device is the permanent magnet turbo motor generator 161 provided in the electric turbocharger 16. However, the second power transfer device in the disclosed technology is not particularly limited, and may be, for example, at least one of the permanent magnet supercharger motor generator 461 provided in the electric supercharger 46 as shown in FIG. 6 or the second permanent magnet motor generator 561 that is separate from the first permanent magnet motor generator 14 as shown in FIG. 7 and that provides motoring and generates electric power.

Furthermore, the features of the embodiments described above can be combined as desired. For example, the electric supercharger in the fourth embodiment can be combined with the first embodiment including the electric turbocharger. Furthermore, the second permanent magnet motor generator in the fifth embodiment can be added to this combination. Furthermore, the starter motor and the battery that operates at a low voltage in the second embodiment can be added to this combination. Furthermore, the capacitor in the third embodiment can be added to this combination.

For another example, the second permanent magnet motor generator in the fifth embodiment can be combined with the first embodiment including the electric turbocharger. Furthermore, the starter motor and the battery that operates at a low voltage in the second embodiment can be added to this combination. Furthermore, the capacitor in the third embodiment can be added to this combination.

For another example, the second permanent magnet motor generator in the fifth embodiment can be combined with the fourth embodiment including the electric supercharger. Furthermore, the starter motor and the battery that operates at a low voltage in the second embodiment can be added to this combination. Furthermore, the capacitor in the third embodiment can be added to this combination.

Any of the capacitor in the third embodiment, the electric supercharger in the fourth embodiment, and the second permanent magnet motor generator in the fifth embodiment can be combined with the second embodiment including the starter motor and the battery that operates at a low voltage.

Any of the starter motor and the battery that operates at a low voltage in the second embodiment, the electric supercharger in the fourth embodiment, and the second permanent magnet motor generator in the fifth embodiment can be combined with the third embodiment including the capacitor.

### Reference Signs List

- 10: straddled vehicle
- 11: engine
- 11a: crankshaft
- 12a: drive wheel
- 13: high-voltage power supply system
- 14: first permanent magnet motor generator
- 15: first MG control unit
- 16: electric turbocharger
- 17: low-voltage power supply system
- 21: starter motor
- 31: capacitor
- 46: electric supercharger
- 56: second permanent magnet motor generator
- 141: stator
- 141T: tooth
- 141W: winding
- 142: rotor
- 142a: magnetic pole
- 161: permanent magnet turbo motor generator (first power transfer device)
- 461: permanent magnet supercharger motor generator (first power transfer device)
- 561: second permanent magnet motor generator (first power transfer device)

## Claims

1. A straddled vehicle comprising:
an engine having a crankshaft and configured to output torque via the crankshaft;
a drive wheel configured to receive at least a portion of the torque outputted from the engine and mechanically transmitted thereto to drive the straddled vehicle;
a high-voltage power supply system configured to operate at a high voltage that is higher than a low voltage of a low-voltage power supply system having a low-voltage battery connected thereto;
a first permanent magnet motor generator configured to transfer electric power to and from the high-voltage power supply system, apply torque to the drive wheel by motoring, and generate electric power by receiving torque from the engine or the drive wheel, the first permanent magnet motor generator including a stator and a rotor, the stator having a plurality of teeth arranged in a circumferential direction and a winding wound around each of the plurality of teeth, the rotor having magnetic poles and being provided on a rotary shaft that is coaxial with and rotates at the same speed as the crankshaft;
a first MG control unit electrically connected to the high-voltage power supply system without being connected to a battery and also electrically connected to the first permanent magnet motor generator, and configured to control the motoring and the electric power generation by the first permanent magnet motor generator; and
a first power transfer device electrically connected to the high-voltage power supply system without being connected to a battery that functions at the high voltage and configured to transfer electric power to and from the high-voltage power supply system, the first power transfer device being any one of:
a capacitor;
a permanent magnet turbo motor generator provided in an electric turbocharger;
a permanent magnet supercharger motor generator provided in an electric supercharger; or
a second permanent magnet motor generator that is separate from the first permanent magnet motor generator and that provides motoring and generates electric power, wherein
the first MG control unit uses, as power, the high voltage that is higher than the low voltage of the low-voltage battery to perform a field-weakening control on the first permanent magnet motor generator including the rotor that rotates at the same speed as the engine of the straddled vehicle and in which the number of the magnetic poles is greater than 2/3 the number of the teeth so that the level of voltage suppression that is achieved through the field-weakening control increases because of increased reactance resulting from a greater number of magnetic poles of the first permanent magnet motor generator, and so that a component of current for the field-weakening control is supplied to the winding by overcoming increased reactance at high rotation speeds of the engine of the straddled vehicle because of the field-weakening control using the high voltage as power.

2. The straddled vehicle according to claim 1, further comprising
a starter motor configured to operate at the low voltage of the low-voltage power supply system to start the engine without motoring by the first permanent magnet motor generator, wherein
the first MG control unit uses, as power, the high voltage that is higher than the low voltage of the low-voltage battery for the operation of the starter motor to perform the field-weakening control on the first permanent magnet motor generator including the rotor that rotates at the same speed as the engine of the straddled vehicle and in which the number of the magnetic poles is greater than 2/3 the number of the teeth.

3. The straddled vehicle according to claim 1 or 2, wherein
the first power transfer device is the capacitor,
the first permanent magnet motor generator receives electric power from the capacitor to apply torque to the crankshaft by motoring, and
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

4. The straddled vehicle according to any one of claims 1 to 3, wherein
the first power transfer device is the permanent magnet turbo motor generator provided in the electric turbocharger,
the first permanent magnet motor generator receives electric power generated by the permanent magnet turbo motor generator to apply torque to the crankshaft by motoring, and
the first MG control unit uses, as power, the high voltage of the high-voltage power supply system to which the electric turbocharger is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

5. The straddled vehicle according to any one of claims 1 to 4, wherein
the first power transfer device is the permanent magnet supercharger motor generator provided in the electric supercharger,
the first permanent magnet motor generator receives electric power generated by the permanent magnet supercharger motor generator to apply torque to the crankshaft by motoring, and
the first MG control unit uses, as power, the high voltage of the high-voltage power supply system to which the electric supercharger is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

6. The straddled vehicle according to any one of claims 1 to 5, wherein
the first power transfer device is the second permanent magnet motor generator,
the first permanent magnet motor generator receives electric power generated by the second permanent magnet motor generator to apply torque to the crankshaft by motoring, and
the first MG control unit uses, as power, the high voltage of the high-voltage power supply system to which the second permanent magnet motor generator is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

7. The straddled vehicle according to any one of claims 1 to 6, wherein
the first power transfer device is the second permanent magnet motor generator mechanically connected to a rotary shaft provided in a torque transmission path between the crankshaft and the drive wheel,
the first permanent magnet motor generator receives electric power generated by the second permanent magnet motor generator to apply torque to the crankshaft by motoring, and
the first MG control unit uses, as power, the high voltage of the high-voltage power supply system to which the second permanent magnet motor generator is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

8. The straddled vehicle according to any one of claims 1 to 7, further comprising
a second power transfer device that is any one of:
the permanent magnet turbo motor generator provided in the electric turbocharger;
the permanent magnet supercharger motor generator provided in the electric supercharger; or
the second permanent magnet motor generator that is separate from the first permanent magnet motor generator and that provides motoring and generates electric power, wherein
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.

9. The straddled vehicle according to claim 8, wherein
the second power transfer device receives electric power from both the capacitor and the first permanent magnet motor generator to provide motoring, and
the first MG control unit uses, as power, the high voltage of the high-voltage power supply system to which the capacitor is connected, the high voltage being higher than the low voltage of the low-voltage battery, to perform the field-weakening control on the first permanent magnet motor generator including the rotor that rotates at the same speed as the engine of the straddled vehicle and in which the number of the magnetic poles is greater than 2/3 the number of the teeth.
